# EUROPEAN PATENT SPECIFICATION

(11) **EP 4 194 241 B1**
(45) Date of publication and mention of the grant of the patent: **24.09.2025**
(21) Application number: 22213003.1
(22) Date of filing: 13.12.2022
(51) Int. Cl.: B60K 6/387, B60K 6/442, B60K 6/547, F16D 13/38, B60W 10/02, B60W 10/06, B60W 10/08, B60W 10/11, B60W 20/10, B60W 30/18

(54) **A METHOD AND AN APPARATUS FOR CONTROLLING A HYBRID ELECTRIC ARCHITECTURE OF A WORK VEHICLE**
VERFAHREN UND VORRICHTUNG ZUR STEUERUNG EINER HYBRIDEN ELEKTRISCHEN ARCHITEKTUR EINES ARBEITSFAHRZEUGS
PROCÉDÉ ET APPAREIL DE COMMANDE D'UNE ARCHITECTURE ÉLECTRIQUE HYBRIDE D'UN VÉHICULE DE TRAVAIL

(30) Priority: 13.12.2021 IT 202100031181
(43) Date of publication of application: 14.06.2023
(73) Proprietor: CNH Industrial Italia S.p.A., 10156 Torino (IT)
(72) Inventor: BORGHI, Alberto, 42033 Carpineti (IT); INVERSANI, Alessio, 41030 Cavezzo (Modena) (IT); PETRIGLIANO, Rocco, 75029 Valsinni, MT (IT); CINQUEPALMI, Maria Paola, 41124 Modena (MO) (IT)
(74) Representative: CNH Industrial IP Department

(56) References cited:
- EP-A1- 1 953 022
- JP-A- 2021 130 372
- US-B2- 6 691 809
- US-B2- 8 573 339
- US-B2- 9 205 831
- MANZONI V ET AL: "Automatic end-of-line tuning for a motion inverter in agricultural tractors", CONTROL ENGINEERING PRACTICE, PERGAMON PRESS, OXFORD, GB, vol. 18, no. 11, 1 November 2010 (2010-11-01), pages 1342 - 1355, XP027472055, ISSN: 0967-0661, [retrieved on 20101101], DOI: 10.1016/J.CONENGPRAC.2010.05.011

## Description

### TECHNICAL FIELD

The invention concerns a method and an apparatus for controlling a hybrid electric architecture of a work vehicle, such as an agricultural vehicle.

### BACKGROUND OF THE INVENTION

Transmissions for work vehicles may have different configurations, such as
- manual shifted transmissions, in which all gears of the transmissions are engaged directly by the driver through lever mechanisms that command clutches, synchronizers, and dog clutches to select the gear;
- semi-powershift transmission, in which some gears are engaged in powershift mode, i.e. by swapping the torque by a couple of clutches, and other gears are actuated like in manual shifted transmissions; and
- full powershift transmission, in which all gears of the transmission are engaged in powershift mode.

For semi and full powershift transmissions, a dual clutch architecture (DCT) is often considered an optimal layout in terms of efficiency.

Usually, a DCT architecture comprises two main clutches, namely a forward and a reverse clutch to select the forward or reverse motion, and two additional clutches, namely an odd and an even clutch to select one of two different subsets of gears, namely odd and even gears.

A shuttling maneuver is recognized in the field as a maneuver in which the direction of the advancing speed of the off road vehicle is reversed by swapping the forward and reverse clutch.

In particular, the engine of the architecture is controlled during the shuttling maneuver according to a reference speed profile, typically having a triangular or V shape: the speed according to the profile sharply goes to zero and then goes up again; therefore, the resulting speed of the work vehicle at the end of the shuttling maneuver has an opposite direction with respect to the initial speed.

The shuttling maneuver causes the need of dissipating a significant amount of kinetic energy due to the reversion of the speed.

US8573339B2, EP1953022A1, JP2021130372A and US6691809B2 disclose a hybrid parallel architecture with an improved energy efficiency; MANZONI V ET AL: "Automatic end-of-line turning for a motion inverter in agricultural tractors", CONTROL ENGINEERING PRACTICE, PERGAMON PRESS, OXFORD, GB, vol 18, no.11, 1 November 2010 (2010-11-01), pages 1342-1355, XP027472055, ISSN: 0967-0661, DOI: 10.1016/J.CONENGPRAC.2010.05.011 discloses a method to manage the inversion of trajectory even tough not applied to an hybrid parallel architecture.

Normally, the dissipation is carried out through the newly engaged clutch of the forward and reverse clutch after the swapping. The engaged clutch is subject to slipping, such that the kinetic energy to be dissipated is transformed into heat, which is transferred to the lubricating oil of the clutch.

This way of dissipating the kinetic energy has drawbacks related to the degradation of the lubricating oil and to an unwanted drop of the engine speed associated to the slipping.

Indeed, the drop results in an uncomfortable feeling of the driver.

Therefore, the need is felt for an improvement in the field, in particular by addressing the abovementioned drawbacks.

An object of the invention is to satisfy such a need.

### SUMMARY OF THE INVENTION

The object is reached by a method and an apparatus for controlling a hybrid architecture of a work vehicle as defined by the independent claims.

Dependent claims set out particular embodiments of the invention.

### BRIEF DESCRIPTION OF DRAWINGS

For a better understanding of the present invention, a preferred embodiment is described in the following, by way of a non-limiting example, with reference to the attached drawings wherein the only figure is a schematic representation of a hybrid parallel architecture of a vehicle, which is controllable through the method and the apparatus of the invention.

### DETAILED DESCRIPTION OF THE INVENTION

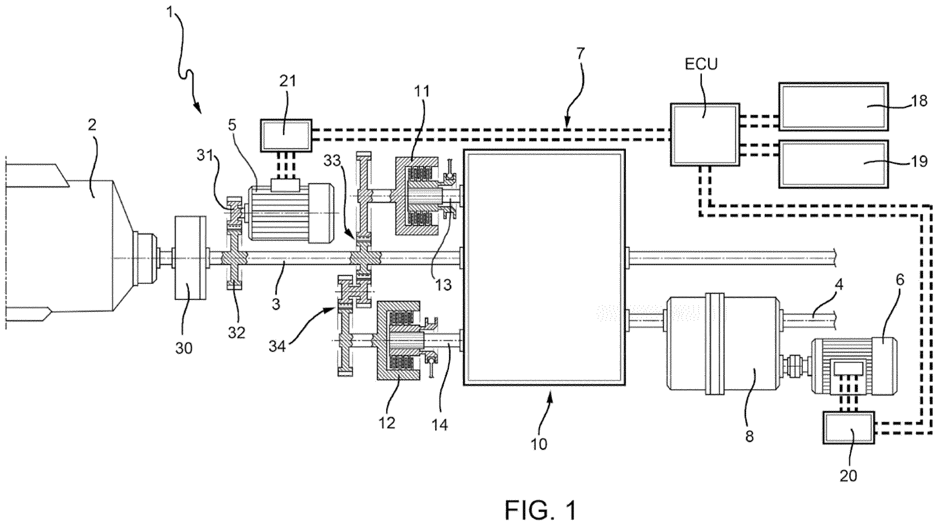

Figure 1 discloses a hybrid architecture 1, specifically of the parallel type, for driving a vehicle, in particular a work vehicle such as a tractor (not illustrated).

The architecture 1 comprises an engine 2 and an input shaft 3 coupled to the engine 2 to receive power therefrom. In particular, the input shaft 3 is coupled to the engine 2 through a damper or flywheel device 30 of the architecture 1.

Furthermore, the architecture 1 comprises an output shaft 4 to be connected to a drive axle of the vehicle to move the latter.

Moreover, the architecture comprises two electric machines 5, 6 being in particular configured to operate at least as a generator and a motor, respectively. The electric machines 5, 6 are respectively coupled to the input and the output shaft 3, 4, to receive power from the input shaft 3 and deliver power to the output shaft 4.

In particular, the electric machine 6 is coupled to the output shaft 4 by means of a mechanical torque coupler 8, e.g. comprising an epicyclical gearing or another kind of gearing, such as an ordinary gearing, configured to add the output torque of the electric machine 6 to the already acting torque on the output shaft 4.

In the embodiment shown in figure 1, the electric machine 5 is coupled to the input shaft 3 by means of gear wheels of the architecture 1, in particular a couple of meshing gear wheels 31, 32, respectively fixed to the electric machine 5 and the input shaft 3.

The electric machines 5, 6 are electrically connected to each other by means of an electrical network 7 of the architecture 1. The electrical network 7 is suitable for transmitting the electric power generated by the electric machine 5 to the electric machine 6.

The architecture 1 further comprises a transmission 10, in particular a dual clutch transmission, controllable to connect the input shaft 3 to the output shaft 4.

More in detail, transmission 10 comprises a forward clutch 11 and a reverse clutch 12.

Transmission 10 connects the input shaft 3 to the output shaft 4 via one of the clutches 11, 12. Transmission 10 may be of the semi-powershift or full powershift type.

The transmission 10 is configured such that the output shaft 4 rotates according to opposite directions respectively when the output shaft 4 is connected to the input shaft 3 via the forward clutch 11 and the reverse clutch 12.

In particular, the rotation direction of the output shaft 4 when connected to the input shaft 3 via the forward clutch 11 corresponds to a forward motion of the vehicle. In this case, more in particular, the rotation direction is a clockwise direction.

On the other hand, the rotation direction of the output shaft 4 when connected to the input shaft 3 via the reverse clutch 12 corresponds to a reverse motion of the vehicle. In this case, more in particular, the rotation direction is an anticlockwise direction.

In the embodiment shown, the clutch 11 is coupled to the input shaft by means of a gear train 33, in particular defined by two meshing gear wheels respectively fixed to the clutch 11 and the input shaft 3.

Similarly, but independently, the clutch 12 is coupled to the input shaft 3 by means of a gear train 34, in particular defined by two meshing gear wheels respectively fixed to the clutch 12 and the input shaft 3.

Transmission 10 comprises a gear shift assembly configured to set a gear ratio between the input and the output shaft 3, 4. The set gear ratio, which may be selected automatically or by the driver through known commands, is one of a given plurality of gear ratios corresponding to the gears of the transmission 10.

Transmission 10 connects the input and the output shaft 3, 4 via the clutch 11 or via the clutch 12, in particular based on the required motion of the vehicle, i.e. a forward or a reverse motion.

In particular, transmission 10 comprises two intermediate shafts 13, 14 respectively connected to the clutches 11, 12 and both connectable to the output shaft 4 by means of the gear shift assembly according to the selected gear ratio.

Each gear ratio is preferably defined between the input shaft 3 and the output shaft 4, but it may also be defined differently as, for example, between the relevant intermediate shaft 13 or 14 and the output shaft 4.

Specifically, the transmission ratio of the clutches 11, 12 can be determined as a function of the control thereof, in particular based on the expected slipping corresponding to such a control; for example, when no slipping occurs, the transmission ratio of the clutches 11, 12 is equal to one or to another predetermined value. Therefore, the relationship between the two definitions of the gear ratios is straightforward, such that the skilled person can easily derive the gear ratios according to each one of the definitions starting from the same gear ratios according to the other of the definitions.

To control the architecture 1, the vehicle comprises a control unit ECU.

Control unit ECU is configured to set a first target reference signal corresponding to an overall torque to be delivered to the output shaft 4 during a shuttling operation. For example, the first target reference signal may be set arbitrarily or based on other target reference signals, as it will be discussed in the following.

For a matter of clarity, the expression "during" is to be strictly intended as indicating that the first target reference signal temporally corresponds to the entire shuttling operation, and the temporal correspondence may not holds for only a portion of the shuttling operation.

A shuttling operation comprises a swapping of the clutches 11, 12. For example, the shuttling operation may be defined by the swapping. In other words, in particular, the shuttling operation or the swapping may comprise or be defined by:
- a disengagement step of one of the clutches 11, 12, and
- an engagement step, in particular substantially simultaneous to the former step, of the other one of the clutches 11, 12.

The expression "substantially simultaneous" is here intended with the meaning that the two steps have at least a time overlap, which may be even infinitesimal, i.e. tending to zero, or such that the two steps are exactly simultaneous, even if this is neither strictly necessary nor limitative. If not exactly simultaneous, the starting of the engagement step comes after the one of the disengagement step.

More precisely, the shuttling involves that the vehicle stops, which means that its speed becomes zero, and then that the advancing direction of the vehicle is reversed.

The engagement step may for example start when the vehicle is stopped.

Accordingly, the overall torque to be delivered to the output shaft 4 changes its sign after the swapping or possibly at some point of the engagement step, in particular depending on the operating conditions of the vehicle. Therefore, the first target signal considers the sign change.

Hence, in accordance with the sign change, also the signs of the output speed and torque of the electric machines 5, 6 shall change after the swapping or the engagement step.

Furthermore, the control unit ECU is further configured to determine at least one parameter as a minimizer or maximizer of a cost function having one or more input variables. In other words, the determination of the at least one parameter corresponds to the solution of an optimal control problem. The solution of the optimal control problem can be also subject to a plurality of constraints, as usual in the field of optimal control problems.

The cost function may be stored in the control unit ECU.

For example, the cost function may be representative of an energy expenditure of the architecture 1 during the shuttling maneuver. The energy expenditure may in particular comprise or be defined by an energy dissipation through one or both the clutches 11, 12, and/or a global or partial energy expenditure through one or more of the other components of the architecture 1, such as the engine 2, the electric machine 5, the electric machine 6, the electrical network 7, and the like. As a further example, the cost function may be representative of a positive difference, e.g. a modulus of a difference or a squared difference, between an actual dynamic quantity of the architecture 1, e.g. the acceleration or the speed of the vehicle, and a corresponding reference during the shuttling maneuver. Furthermore, the cost function may even be a combination of the discussed examples. According to these examples, the determined parameter is a minimizer. However, the cost function may be also representative of an energy generated by the architecture 1, for example by means of the electric machines 5, 6. In this case, the determined parameter is a maximizer.

The cost function has at least one input variable corresponding to or depending on the first target reference signal. In particular, the first target reference signal is assigned to the input variable.

The cost function is preferably based on a model of the vehicle or the architecture 1, which may be a known theoretical model or an experimental model obtained by means of known model identification techniques from experimental data. Experimental models include both black box and grey box models.

The model may be stored in the control unit ECU.

The above mentioned parameter is indicative of a torque split of said overall torque into a first and a second torque respectively delivered to the output shaft 4 from the electric machine 6 and the transmission 10. Thus, in particular, the parameter is indicative of both the first and the second torque.

Preferably, the parameter can be expressed as a percentage of the overall torque, in particular equal to the second torque. The remaining portion of the overall torque will be therefore equal to the first torque accordingly.

Possibly, more than one parameter are determined, for instance two parameters respectively indicative of the first and the second torque, and so of the torque split.

Then, control unit ECU is configured to control at least the transmission 10 and the electric machine 6 during the shuttling operation according to the determined parameter or parameters, if more than one, as a reference, namely such that, more precisely, a torque actually delivered to the input shaft is substantially corresponding to the first target reference signal or substantially equal to the overall torque to be delivered to the output shaft 4.

Since the shuttling operation includes the swapping of the clutches 11, 12, the resulting first and the second torque are subject to a change of their signs after the swapping, coherently with the sign change of the overall torque to be delivered to the output shaft 4.

In particular, for example when one parameter is determined, control unit ECU may be configured to determine two reference signals for the transmission 10 and the electric machine 6 from the determined parameter. More in particular, two target signals for the first and the second torque are determined from the determined parameter. Then, control unit ECU controls the electric machine 6 and the transmission 10 respectively based on the target signals.

Alternatively, when two parameters are determined, the same parameters may be used as target signals for the respective control of the electric machine 6 and the transmission 10.

In this manner, the torque actually delivered to the input shaft is substantially corresponding to the first target reference signal or substantially equal to the overall torque to be delivered to the output shaft 4.

The term substantially here indicates that the difference between the actually delivered torque and the overall torque to be delivered is below a negligibility threshold or even equal to zero.

With greater detail, the transmission 10 and so the first torque are controlled by controlling the above mentioned engagement step. In particular, control unit ECU is configured to control the engagement step by modulation of the first torque according to the determined parameter or parameters, if more than one.

The modulation can be achieved for example with the control unit ECU controlling a relative position between the engaging portions of the clutch 11 or the clutch 12. This corresponds to a control of the slipping, which determines how much of the output torque of the engine 2 is transmitted to the output shaft 4 via the transmission 10. Clearly, the transmitted torque should follow the first torque indicated by the determined parameter or parameters, if more than one.

Hence, the control unit ECU may also control the engine 2 other than the transmission 10 and the electric machine 6 during the shuttling operation according to the determined parameter or parameters, if more than one. Indeed, the first torque indicated by the determined parameter or parameters can be transmitted to the output shaft by appropriately controlling both the engine 2 and the transmission 10.

As a particular example, control unit ECU may control the engagement step to reach a complete engagement, without slipping, of the clutch 11 or the clutch 12. Here, control unit ECU modulates the first torque by controlling the output torque of the engine 2.

Even more, the control unit ECU may also control the electric machine 5, e.g. for the generation of electric energy. In the latter case, for example, the torque reaching the transmission 10 corresponds to a difference between the output torque of the engine 2 and a torque required by the electric machine 5 for the generation of electric energy.

In view of that, according to a possible embodiment, three parameters are determined, where the parameters are indicative of the output torque of the engine 2, the portion of the latter torque passing through the transmission 10, i.e. the first torque, and the output torque of the electric machine 6, i.e. the second torque. Here, control unit ECU controls the engine 2, the transmission 10, and the electric machine 6 according to the determined parameters as references.

Furthermore, according to a further possible embodiment, an additional fourth parameter is determined, where the fourth parameter is indicative of the torque delivered to the electric machine 5.

Preferably, at least one of the determined parameters or the single determined parameter is determined based on an initial condition to which the parameter or the parameters are subject. The initial condition may be stored in the control unit ECU.

In particular, the initial condition for the single parameter indicative of the torque split may be that the initial value of the parameter is zero if indicative of the percentage of torque passing through the transmission, i.e. of the first torque, or one if indicative of the percentage of torque coming from the electric machine 6. More in particular, such an initial condition may be set immediately after the completion of the abovementioned disengagement step or immediately before the starting of the engagement step.

As a general clarification, the expression "as a reference" comprise the meaning of a reference quantity or signal of a closed loop control, as well as the meaning of a desired quantity or signal to be achieved by an open or closed loop control.

Preferably, control unit ECU is configured to set a second target reference signal corresponding to a desired output speed of the engine 2 during the shuttling operation.

In this case, the cost function may have at least one state variable corresponding to an output speed of the engine 2. Here, the parameter or the parameters are determined under a constraint defined by a set relationship between the state variable and the second target reference signal. The relationship can define a hard constraint, i.e. an equality relationship, or a soft constraint, i.e. an inequality relationship. For example, the state variable may be constrained to be equal to the second target reference signal; alternatively, a difference between the state variable and the second target reference signal may be constrained to be lower than a threshold, preferably stored in the control unit ECU. Here, therefore, a constrained optimization is carried out to determine the parameter or parameters.

Furthermore, according to a possible embodiment, the first target reference signal is set based on the second target reference signal.

With greater detail, control unit ECU is configured to determine a quantity indicative of an actual output speed of the engine 2. For example, control unit ECU determinates the quantity by acquiring the same from a transducer of the architecture 1.

Moreover, the first target reference signal is set based on the second target reference signal, such that the corresponding overall torque would cause at least a reduction of the modulus of a difference between the actual output speed indicated by the determined quantity and the second target reference signal. In particular, the difference is reduced under a negligibility threshold, e.g. stored in the control unit ECU, or even nullified.

In particular, the setting of the first target reference signal as a function of the second target reference signal and of the determined quantity may be based on a model of the architecture 1, possibly but not necessarily theoretical, e.g. stored in the control unit ECU.

For example, the model can take into account the selected gear ratio for the transmission 10.

In this regard, control unit ECU is configured to select a desired gear ratio of the transmission 10. The first target reference signal is set also based on the selected gear ratio.

Indeed, a reference output torque of the engine 2 can be for example obtained from the second target reference signal and the actual speed of the engine 2 as the torque needed to accelerate the engine 2 such that the actual speed thereof reaches the second target reference signal. Then, the first target reference signal can be obtained from the reference output torque based on the selected gear ratio as evident to a skilled person, for example assuming a fully engaged clutch 11 or clutch 12, possibly even considering a reference torque to be delivered to the electric machine 5.

Further preferably, the control unit ECU is configured to determine a further quantity indicative of the actual output torque of the engine 2. For example, the control unit ECU determines the further quantity by acquiring it from a transducer of the architecture 1.

The cost function may have an input variable corresponding to the determined further quantity and so indicative of the actual output torque of the engine 2.

Optionally, the electrical network 7 comprises a dissipation device 18 for dissipating electric energy generated by at least one of the electric machines 5, 6.

Indeed, the electric machine 6 may operate also as a generator, not only as a motor, specifically to decelerate the output shaft 4.

For example, the dissipation device 18 comprises a plurality of braking resistors to dissipate the electric energy by transformation into heat.

When the output shaft 4 is decelerated by means of the control of the electric machine 6, the energy generated by the latter working as a generator may be dissipated by the dissipation device 18.

Moreover, the energy generated by the electric machine 5 may be dissipated by the dissipation device 18 when greater than the electric energy expended by the electric machine 6 working as a motor.

Furthermore, optionally, the electrical network 7 comprises a storing device 19, such as a battery or a capacitor, configured to store electric energy generated by at least one of the electric machines 5, 6. The storing device 19 is also configured to supply the stored electric energy to the electric machine 6, in particular when the latter works as a motor.

When the output shaft 4 is accelerated by means of the control of the electric machine 6, the energy stored by the storing device 19 may be supplied to the electric machine 6.

Moreover, the energy stored by the storing device 19 may be supplied to the electric machine 6 when the electric energy generated by the electric machine 5 working as a generator is lower than the electric energy required by the electric machine 6 working as a motor.

Furthermore, optionally, the electrical network 7 comprises a power converter 20, e.g. an inverter, coupled to the electric machine 6 to process or control the electric energy flowing from and to the electric machine 6.

In a similar manner, the electrical network 7 may comprise a power converter 21, e.g. an inverter, coupled to the electric machine 5 to process or control the electric energy flowing from and to the electric machine 5.

Control unit ECU makes part of an apparatus for controlling the architecture 1. Transducers of the architecture 1 may form part of the apparatus.

Control unit ECU carries out a method comprising the following steps:
a. setting the first target reference signal corresponding to the overall torque to be delivered to the output shaft 4 during a shuttling operation comprising a swapping of the clutches 11, 12,
b. determining at least one parameter as a minimizer or maximizer of a cost function having one or more input variables comprising a first variable corresponding to the first target reference signal, the parameter being indicative of a torque split of the overall torque into a first and a second torque respectively delivered to the output shaft 4 from the electric machine 6 and the transmission 10, and
c. controlling at least the transmission 10 and the electric machine 6 during the shuttling operation according to the at least one parameter as a reference parameter, namely such that, more precisely, a torque actually delivered to the input shaft is substantially corresponding to the first target reference signal or equal to the overall torque to be delivered to the output shaft 4.

Preferably, the method may comprise one or more of the following steps:
d. setting a second target reference signal corresponding to a desired output speed of the engine 2 during the shuttling operation,
e. determining a first quantity indicative of an actual output speed of the engine 2,
f. selecting a desired gear ratio between the gear ratios of the transmission 10.

The method can be carried out by the control unit ECU by means of a computer program. Such a computer program comprises instructions causing the control unit ECU to carry out the method, when the program is executed by the control unit ECU.

The computer program can be stored on a computer readable device.

In view of the foregoing, the advantages of the method and the apparatus according to the invention are apparent.

The mechanical performances of architecture 1, for example in terms of accelerations of the vehicle and/or dissipation due to slipping in clutches 11, 12, are optimized by the determination of the parameter or parameters.

The engine 2 have a controlled behavior via the controlled slipping and the help of the electric machine 6. In particular, sudden and incontrollable increases or decreases of the output speed of the engine 2 are avoided.

Furthermore, the driver feels a faster response of the architecture 1 and a good comfort.

Moreover, the shuttling maneuver becomes extremely reliable and repeatable.

Eventually, it is clear that modifications can be made to the described method and apparatus which do not extend beyond the scope of protection defined by the claims.

The expression parallel architecture includes also the so called serial-parallel architectures.

## Claims

1. A method for controlling a hybrid parallel architecture (1) of a work vehicle, the architecture comprising:
- an engine (2),
- an input shaft (3) coupled to the engine (2) to receive power therefrom,
- an output shaft (4) connected to at least one drive axle of the vehicle,
- a first electric machine (5) coupled to the input shaft (3) to receive power therefrom,
- a second electric machine (6) coupled to the output shaft (4) to deliver power thereto,
- an electrical network (7) for transmitting electric power generated by the first electric machine (5) to the second electric machine (6), and
- a transmission (10) comprising a forward clutch and a reverse clutch (11, 12), the transmission (10) being controllable to connect the input shaft (3) to the output shaft (4) via one of the forward clutch and the reverse clutch (11, 12),
the method being **characterised in that** it comprises the steps of
a. setting a first target reference signal corresponding to an overall torque to be delivered to the output shaft (4) during a shuttling operation comprising a swapping of the forward and reverse clutch (11, 12),
b. determining at least one parameter as a minimizer or maximizer of a cost function having one or more input variables comprising a first variable corresponding to the first target reference signal, the parameter being indicative of a torque split of said overall torque into a first and a second torque respectively delivered to the output shaft (4) from the second electric machine (6) and the transmission (10), and
c. controlling at least the transmission (10) and the second electric machine (6) during the shuttling operation according to said at least one parameter as a reference parameter.

2. The method of claim 1, wherein the swapping comprises a disengagement of a first clutch, defined by one of the forward clutch and the reverse clutch (11, 12), and an engagement of a second clutch, defined by the other one of the forward clutch and the reverse clutch (11, 12),
wherein the step c. comprises controlling the engagement of the second clutch by a modulation of the first torque transmitted to the output shaft (4) according to said at least one parameter.

3. The method of claim 1 or 2, further comprising the step of:
d. setting a second target reference signal corresponding to a desired output speed of the engine (2) during the shuttling operation.

4. The method of claim 3, wherein the cost function has at least one state variable corresponding to an output speed of the engine (2), said at least one parameter being determined in step b. under a constraint defined by a set relationship between the state variable and the second target reference signal.

5. The method of claim 3 or 4, further comprising the steps of
e. determining a first quantity indicative of an actual output speed of the engine (2),
wherein the first target reference signal is set in step a., such that the corresponding overall torque is a desired torque corresponding to a reduction of the modulus of a difference between the actual output speed indicated by the first quantity and the second target reference signal under a negligibility threshold or even up to zero.

6. The method of claim 5, wherein the transmission (10) comprises a gear shifting device controllable to set one of a plurality of gear ratios between the input shaft (3) and the output shaft (4), the method comprising the step of:
f. selecting a desired gear ratio between the plurality of gear ratios,
wherein the first target reference signal is set in step a. based further on the selected desired gear ratio.

7. The method of any of the foregoing claims, further comprising the step of:
g. determining a second quantity indicative of an actual output torque of the engine (2),
wherein the input variables comprise a second variable corresponding to the determined second quantity.

8. The method of any of the foregoing claims, wherein the electrical network (7) comprises dissipation means (18) for dissipating electric energy generated by the first and/or the second electric machine (5, 6), wherein the step c. comprises the dissipation of the electric energy generated by the first electric machine (5) or the second electric machine (6) respectively when greater than the electric energy expended by the second electric machine (6) or the first electric machine (5), according to said at least one parameter.

9. The method of any of the foregoing claims, wherein the electrical network (7) comprises storing means (19) for storing electric energy generated by the first and/or the second electric machine (5, 6), as well as for supplying the stored electric energy to the first and/or second electric machine (6), wherein the step c. comprises the supply of the electric energy stored by the storing means (19) to the second electric machine (6) when the energy generated by the first electric machine (5) is lower than the electric energy required by the second electric machine (6), according to said at least one parameter,
and/or the supply of the electric energy stored by the storing means (19) to the first electric machine (5) when the energy generated by the second electric machine (6) is lower than the electric energy required by the first electric machine (5), according to said at least one parameter.

10. An apparatus for controlling a hybrid parallel architecture of a vehicle, the apparatus comprising a control unit (ECU) programmed to implement the method of any of the foregoing claims.

## Patentansprüche

1. Verfahren zum Steuern einer hybriden Parallelarchitektur (1) eines Arbeitsfahrzeugs, wobei die Architektur aufweist:
- einen Motor (2),
- eine mit dem Motor (2) gekoppelte Eingangswelle (3) zur Leistungsaufnahme hiervon,
- eine mit mindestens einer Antriebsachse des Fahrzeugs verbundene Ausgangswelle (4),
- eine mit der Eingangswelle (3) gekoppelte erste elektrische Maschine (5) zur Leistungsaufnahme hiervon,
- eine mit der Ausgangswelle (4) gekoppelte zweite elektrische Maschine (6) zur Leistungsabgabe daran,
- ein elektrisches Netzwerk (7) zur Übertragung elektrischer Energie, die von der ersten elektrischen Maschine (5) erzeugt wird, an die zweite elektrische Maschine (6), und
- ein Getriebe (10) mit einer Vorwärtskupplung und einer Rückwärtskupplung (11, 12), wobei das Getriebe (10) steuerbar ist, um die Eingangswelle (3) über eine der Vorwärtskupplung und der Rückwärtskupplung (11, 12) mit der Ausgangswelle (4) zu verbinden,
wobei das Verfahren **dadurch gekennzeichnet ist, dass** es die folgenden Schritte aufweist:
a. Festlegen eines ersten Zielreferenzsignals, das einem während eines Shuttle-Vorgangs, der einen Wechsel zwischen der Vorwärtskupplung und der Rückwärtskupplung (11, 12) umfasst, an die Ausgangswelle (4) zu übergebenden Gesamtdrehmoment entspricht,
b. Bestimmen mindestens eines Parameters als Minimierer oder Maximierer einer Kostenfunktion mit einer oder mehreren Eingangsvariablen, die eine erste Variable umfassen, die dem ersten Zielreferenzsignal entspricht, wobei der Parameter ein Drehmomentverhältnis des Gesamtdrehmoments in ein erstes und ein zweites Drehmoment angibt, die jeweils von der zweiten elektrischen Maschine (6) und dem Getriebe (10) an die Ausgangswelle (4) übergeben werden, und
c. Steuern mindestens des Getriebes (10) und der zweiten elektrischen Maschine (6) während des Shuttle-Vorgangs gemäß dem mindestens einen Parameter als Referenzparameter.

2. Verfahren nach Anspruch 1, wobei der Wechsel ein Auskuppeln einer ersten Kupplung, definiert durch eine der Vorwärtskupplung und der Rückwärtskupplung (11, 12), und ein Einkuppeln einer zweiten Kupplung, definiert durch die jeweils andere der Vorwärtskupplung und der Rückwärtskupplung (11, 12), aufweist,
wobei Schritt c. das Steuern des Einkuppelns der zweiten Kupplung durch eine Modulation des ersten an die Ausgangswelle (4) übergebenen Drehmoments entsprechend dem mindestens einen Parameter aufweist.

3. Verfahren nach Anspruch 1 oder 2, das des Weiteren den folgenden Schritt aufweist:
d. Festlegen eines zweiten Zielreferenzsignals, das einer gewünschten Ausgangsdrehzahl des Motors (2) während des Shuttle-Vorgangs entspricht.

4. Verfahren nach Anspruch 3, wobei die Kostenfunktion mindestens eine Zustandsvariable umfasst, die einer Ausgangsdrehzahl des Motors (2) entspricht, wobei der mindestens eine Parameter in Schritt b. unter einer durch eine festgelegte Beziehung zwischen der Zustandsvariable und dem zweiten Zielreferenzsignal definierten Randbedingung bestimmt wird.

5. Verfahren nach Anspruch 3 oder 4, das des Weiteren folgende Schritte aufweist:
e. Bestimmen einer ersten Größe, die eine tatsächliche Ausgangsdrehzahl des Motors (2) angibt, wobei das erste Zielreferenzsignal in Schritt a. so festgelegt wird, dass das entsprechende Gesamtdrehmoment ein gewünschtes Drehmoment ist, das einer Verringerung des Betrags einer Differenz zwischen der durch die erste Größe angegebenen tatsächlichen Ausgangsdrehzahl und dem zweiten Zielreferenzsignal auf unterhalb eines Vernachlässigungsschwellwerts oder sogar bis auf null entspricht.

6. Verfahren nach Anspruch 5, wobei das Getriebe (10) eine Gangschalteinrichtung aufweist, die steuerbar ist, um eines von mehreren Übersetzungsverhältnissen zwischen der Eingangswelle (3) und der Ausgangswelle (4) einzustellen, wobei das Verfahren folgenden Schritt aufweist:
f. Auswählen eines gewünschten Übersetzungsverhältnisses aus den mehreren Übersetzungsverhältnissen, wobei das erste Zielreferenzsignal in Schritt a. zusätzlich auf Grundlage des ausgewählten gewünschten Übersetzungsverhältnisses festgelegt wird.

7. Verfahren nach einem der vorhergehenden Ansprüche, das des Weiteren folgenden Schritt aufweist:
g. Bestimmen einer zweiten Größe, die ein tatsächliches Ausgangsdrehmoment des Motors (2) angibt, wobei die Eingangsvariablen eine zweite Variable aufweisen, die der bestimmten zweiten Größe entspricht.

8. Verfahren nach einem der vorhergehenden Ansprüche, wobei das elektrische Netzwerk (7) eine Dissipationseinrichtung (18) zum Ableiten elektrischer Energie aufweist, die von der ersten und/oder der zweiten elektrischen Maschine (5, 6) erzeugt wird, wobei Schritt c. das Ableiten der elektrischen Energie aufweist, die von der ersten elektrischen Maschine (5) oder der zweiten elektrischen Maschine (6) erzeugt wird, jeweils dann, wenn sie größer ist als die von der zweiten elektrischen Maschine (6) oder der ersten elektrischen Maschine (5) aufgewendete elektrische Energie, gemäß dem mindestens einen Parameter.

9. Verfahren nach einem der vorhergehenden Ansprüche, wobei das elektrische Netzwerk (7) eine Speichereinrichtung (19) zum Speichern elektrischer Energie aufweist, die von der ersten und/oder der zweiten elektrischen Maschine (5, 6) erzeugt wird, sowie zum Zuführen der gespeicherten elektrischen Energie an die erste und/oder die zweite elektrische Maschine (6),
wobei Schritt c. das Zuführen der von der Speichereinrichtung (19) gespeicherten elektrischen Energie an die zweite elektrische Maschine (6) aufweist, wenn die von der ersten elektrischen Maschine (5) erzeugte Energie geringer ist als die von der zweiten elektrischen Maschine (6) benötigte elektrische Energie, gemäß dem mindestens einen Parameter,
und/oder das Zuführen der von der Speichereinrichtung (19) gespeicherten elektrischen Energie an die erste elektrische Maschine (5), wenn die von der zweiten elektrischen Maschine (6) erzeugte Energie geringer ist als die von der ersten elektrischen Maschine (5) benötigte elektrische Energie, gemäß dem mindestens einen Parameter.

10. Vorrichtung zum Steuern einer hybriden Parallelarchitektur eines Fahrzeugs, wobei die Vorrichtung eine Steuereinheit (ECU) aufweist, die dazu eingerichtet ist, das Verfahren nach einem der vorhergehenden Ansprüche auszuführen.

## Revendications

1. Un procédé de commande d'une architecture hybride parallèle (1) d'un véhicule de travail, l'architecture comprenant :
- un moteur (2),
- un arbre d'entrée (3) couplé au moteur (2) pour recevoir la puissance de celui-ci,
- un arbre de sortie (4) raccordé à au moins un essieu moteur du véhicule,
- une première machine électrique (5) couplée à l'arbre d'entrée (3) pour recevoir la puissance de celui-ci,
- une seconde machine électrique (6) couplée à l'arbre de sortie (4) pour lui fournir de l'énergie,
- un réseau électrique (7) pour transmettre l'énergie électrique générée par la première machine électrique (5) à la seconde machine électrique (6), et
- une transmission (10) comprenant un embrayage avant et un embrayage arrière (11, 12), la transmission (10) pouvant être commandée pour raccorder l'arbre d'entrée (3) à l'arbre de sortie (4) par l'intermédiaire de l'embrayage avant et de l'embrayage arrière (11, 12),
le procédé étant **caractérisé en ce qu'**il comprend les étapes consistant à :
a. définir un premier signal de référence cible correspondant à un couple total à délivrer à l'arbre de sortie (4) pendant une opération de va-et-vient comprenant une permutation entre l'embrayage avant et l'embrayage arrière (11, 12),
b. déterminer au moins un paramètre en tant que minimiseur ou maximiseur d'une fonction de coût disposant d'une ou de plusieurs variables d'entrée comprenant une première variable correspondant au premier signal de référence cible, le paramètre étant indicatif d'une répartition dudit couple total en un premier et un second couple respectivement fournis à l'arbre de sortie (4) par la seconde machine électrique (6) et la transmission (10), et
c. contrôler au moins la transmission (10) et la seconde machine électrique (6) pendant l'opération de va-et-vient en fonction dudit au moins un paramètre en tant que paramètre de référence.

2. Le procédé selon la revendication 1, dans lequel la permutation comprend un désengagement d'un premier embrayage, défini par l'un parmi l'embrayage avant et l'embrayage arrière (11, 12), et un engagement d'un second embrayage, défini par l'autre parmi l'embrayage avant et l'embrayage arrière (11, 12),
dans lequel l'étape c. comprend la commande de l'engagement du second embrayage par une modulation du premier couple transmis à l'arbre de sortie (4) selon ledit au moins un paramètre.

3. Le procédé selon la revendication 1 ou la revendication 2, comprenant en outre l'étape consistant à :
d. fixer un second signal de référence cible correspondant à un régime de sortie souhaité du moteur (2) pendant l'opération de va-et-vient.

4. Le procédé selon la revendication 3, dans lequel la fonction de coût a au moins une variable d'état correspondant à un régime de sortie du moteur (2), ledit au moins un paramètre étant déterminé à l'étape b. sous une contrainte définie par une relation définie entre la variable d'état et le second signal de référence cible.

5. Le procédé selon la revendication 3 ou la revendication 4, comprenant en outre les étapes consistant à
e. déterminer une première quantité indicative d'un régime de sortie réel du moteur (2),
dans laquelle le premier signal de référence cible est défini à l'étape a., de sorte que le couple total correspondant est un couple souhaité correspondant à une réduction du module d'une différence entre le régime de sortie réel indiqué par la première quantité et le second signal de référence cible en dessous d'un seuil de négligence, voire jusqu'à zéro.

6. Le procédé selon la revendication 5, dans lequel la transmission (10) comprend un dispositif de changement de vitesse commandable pour définir l'un parmi une pluralité de rapports d'engrenage entre l'arbre d'entrée (3) et l'arbre de sortie (4), le procédé comprenant l'étape consistant à :
f. sélectionner un rapport d'engrenage souhaité parmi la pluralité de rapports d'engrenage,
dans lequel le premier signal de référence cible est défini à l'étape a. basé en outre sur le rapport d'engrenage souhaité sélectionné.

7. Le procédé selon l'une quelconque des revendications précédentes, comprenant en outre l'étape consistant à :
g. déterminer une seconde quantité indicative d'un couple de sortie réel du moteur (2),
dans lequel les variables d'entrée comprennent une seconde variable correspondant à la seconde quantité déterminée.

8. Le procédé selon l'une quelconque des revendications précédentes, dans lequel le réseau électrique (7) comprend des moyens de dissipation (18) pour dissiper l'énergie électrique générée par la première et/ou la seconde machine électrique (5, 6), dans lequel l'étape c. comprend la dissipation de l'énergie électrique générée par la première machine électrique (5) ou la seconde machine électrique (6) respectivement lorsqu'elle est supérieure à l'énergie électrique consommée par la seconde machine électrique (6) ou la première machine électrique (5), en fonction dudit au moins un paramètre.

9. Le procédé selon l'une quelconque des revendications précédentes, dans lequel le réseau électrique (7) comprend des moyens de stockage (19) pour stocker l'énergie électrique générée par la première et/ou la seconde machine électrique (5, 6), ainsi que pour fournir l'énergie électrique stockée à la première et/ou à la seconde machine électrique (6), dans lequel l'étape c. comprend la fourniture de l'énergie électrique stockée par les moyens de stockage (19) à la seconde machine électrique (6) lorsque l'énergie générée par la première machine électrique (5) est inférieure à l'énergie électrique requise par la seconde machine électrique (6), selon ledit au moins un paramètre,
et/ou la fourniture de l'énergie électrique stockée par les moyens de stockage (19) à la première machine électrique (5) lorsque l'énergie générée par la seconde machine électrique (6) est inférieure à l'énergie électrique requise par la première machine électrique (5), selon ledit au moins un paramètre.

10. Un appareil de commande d'une architecture hybride parallèle d'un véhicule, l'appareil comprenant une unité de commande (ECU) programmée pour mettre en œuvre le procédé de l'une quelconque des revendications précédentes.
